# EUROPEAN PATENT SPECIFICATION

(11) **EP 0 929 856 B1**
(45) Date of publication and mention of the grant of the patent: **05.02.2003**
(21) Application number: 96940581.0
(22) Date of filing: 21.11.1996
(51) Int. Cl.: G05G 1/14

(54) **ADJUSTABLE PEDAL ASSEMBLY**
REGELBARE PEDALEINHEIT
ENSEMBLE PEDALE REGLABLE

(30) Priority: 02.10.1996 US 720682; 31.10.1996 US 741981
(43) Date of publication of application: 21.07.1999
(60) Divisional application: 01121145.5
(73) Proprietor: Comcorp Technologies, Inc., Warren, MI 48089 (US)
(72) Inventor: RIXON, Christopher, J., Tecumseh, Ontario N8N 4J7 (CA); BORTOLON, Christopher, Clawson, MI 48107 (US)
(74) Representative: Wharton, Peter Robert
(86) International application number: US9618719
(87) International publication number: WO98014857

(56) References cited:
- EP-A- 0 353 958
- WO-A-90/13862
- US-A- 3 643 525
- US-A- 5 233 882
- US-A- 5 408 899

## Description

### Background of the Invention

This invention relates to control pedal apparatuses and more particularly to adjustment means for selectively adjusting the position of one or more of the control pedals of a motor vehicle.

In a conventional automotive vehicle pedals are provided for controlling brakes and engine throttle. If the vehicle has a manual transmission a clutch pedal is also provided. These pedals are foot operated by the driver. In order for the driver to maintain the most advantageous position for working these control pedals the vehicle front seat is usually slidably mounted on a seat track with means for securing the seat along the track in a plurality of adjustment positions.

The adjustment provided by moving the seat along the seat track does not accommodate all vehicle operators due to differences in anatomical dimensions. Further, there is growing concern that the use of seat tracks, and especially long seat tracks, constitutes a safety hazard in that the seat may pull loose from the track during an accident with resultant injuries to the driver and/or passengers. Further, the use of seat tracks to adjust the seat position has the effect of positioning shorter operators extremely close to the steering wheel where they are susceptible in an accident to injury from the steering wheel or from an exploding air bag. It is therefore desirable to either eliminate the seat track entirely or shorten the seat track to an extent that it will be strong enough to retain the seat during an impact. Shortening or eliminating the seat track requires that means be provided to selectively move the various control pedals to accommodate various size drivers.

Various proposals were made over a period of many years to provide selective adjustment of the pedal positions to accommodate various size drivers but none of these proposals met with any significant commercial acceptance since the proposed mechanisms were unduly complex and expensive and/or accomplished the required pedal adjustment only at the expense of altering other critical dimensional relationship as between the driver and various pedals. Recently a control pedal mechanism has been developed which is simple and inexpensive and easy to operate and that accomplishes the required pedal adjustment without altering further critical dimensional relationships as between the driver and the various pedals. This control pedal mechanism is disclosed in U.S. Patent Nos. 4,875,385; 4,989,474 and 5,078,024 all assigned to the assignee of the present application. The present invention represents improvements to the basic adjustable control pedal design disclosed in these patents.

EP-A-0353958 discloses an adjustable pedal apparatus according to the preamble of claim 1, in particular it discloses a position adjustable pedal assembly for a vehicle comprising a stationary bracket fixed to a vehicle body, a lever pivotably connected to the stationary bracket about a pivot axis, a pedal arm with a pedal pad at its lower end, the pedal arm being connected to the lever so as to pivot about the pivot axis along with the lever in response to a depression force applied to the pedal pad, first means provided between the lever and the pedal arm for adjusting a position of the pedal pad in a longitudinal direction of the vehicle, second means for transmitting the depression force from the lever to a vehicle operation system, third means provided between the lever and the second means for varying a point of application of the depressed force relative to said second means from the lever according to an adjusted pedal pad position.

### Summary of the Invention

This invention is directed to the provision of a simple, inexpensive and effective apparatus for adjusting the control pedals of a motor vehicle.

The adjustable pedal apparatus of the invention is intended for use with any of the control pedals of a motor vehicle and provides a simple and effective means of adjusting the position of the pedal to match the particular anatomical dimension of the operator.

The invention provides an adjustable pedal apparatus according to the appended claims.

The invention provides a compact and simple apparatus for readily adjusting the pedal position.

### Brief Description of the Drawings

FIGURE 1 is an exploded perspective view of a first embodiment of an adjustable brake pedal assembly according to the invention;
FIGURE 2 is a longitudinal cross-sectional view of the brake pedal assembly;
FIGURE 3 is a cross-sectional view taken on lines 3-3 Figure 2;
FIGURE 4 is a front view of the brake pedal assembly;
FIGURE 5 is a fragmentary cross-sectional view of the brake pedal assembly;
FIGURE 6 is a perspective, somewhat schematic view of the brake pedal assembly shown in conjunction with an accelerator pedal assembly according to the invention;
FIGURE 7 is a detail view of a portion of the accelerator pedal assembly;
FIGURE 8 is a circuit diagram for use with the invention adjustable pedal assemblies;
FIGURE 9 is a side elevational view of an accelerator pedal assembly according to a second embodiment of the invention;
FIGURE 10 is a rear view of the accelerator pedal assembly;
FIGURE 11 is a partially exploded view of the accelerator pedal assembly;
FIGURE 12 is a perspective view of a sub assembly of the accelerator pedal assembly;
FIGURES 13 and 14 are cross-sectional views of the accelerator pedal assembly;
FIGURE 15 is a detail view of a section of a housing employed in the accelerator pedal assembly;
FIGURES 16, 17 and 18 are schematic views illustrating the manner in which the invention accelerator pedal assembly operates to generate a hysteresis effect.

### Detailed Description of the Preferred Embodiments

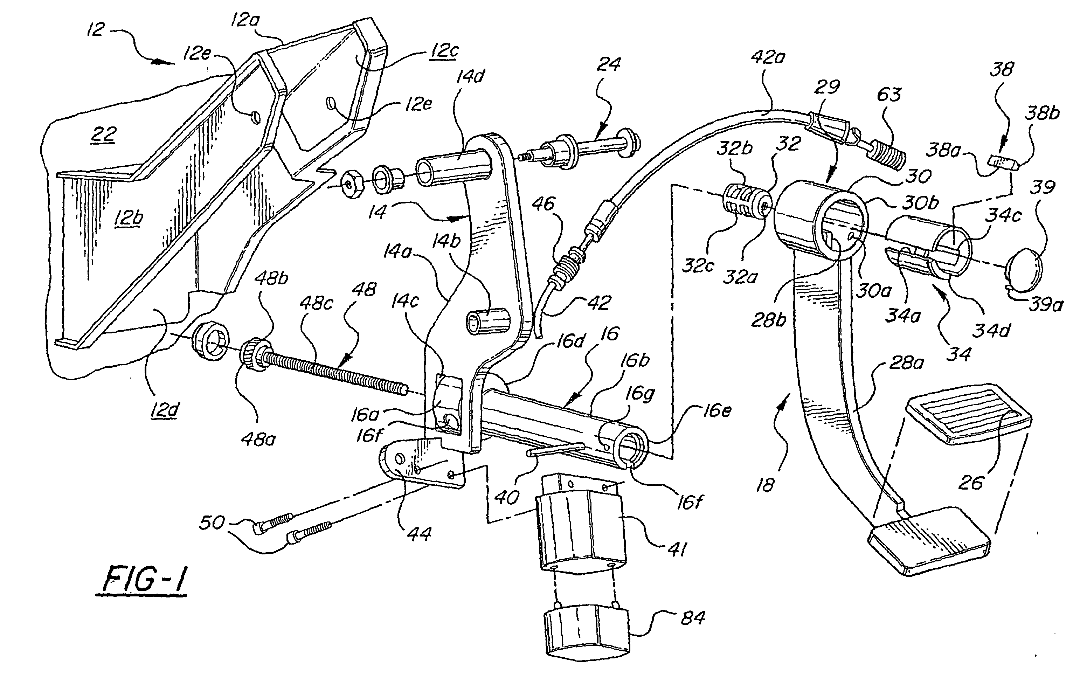

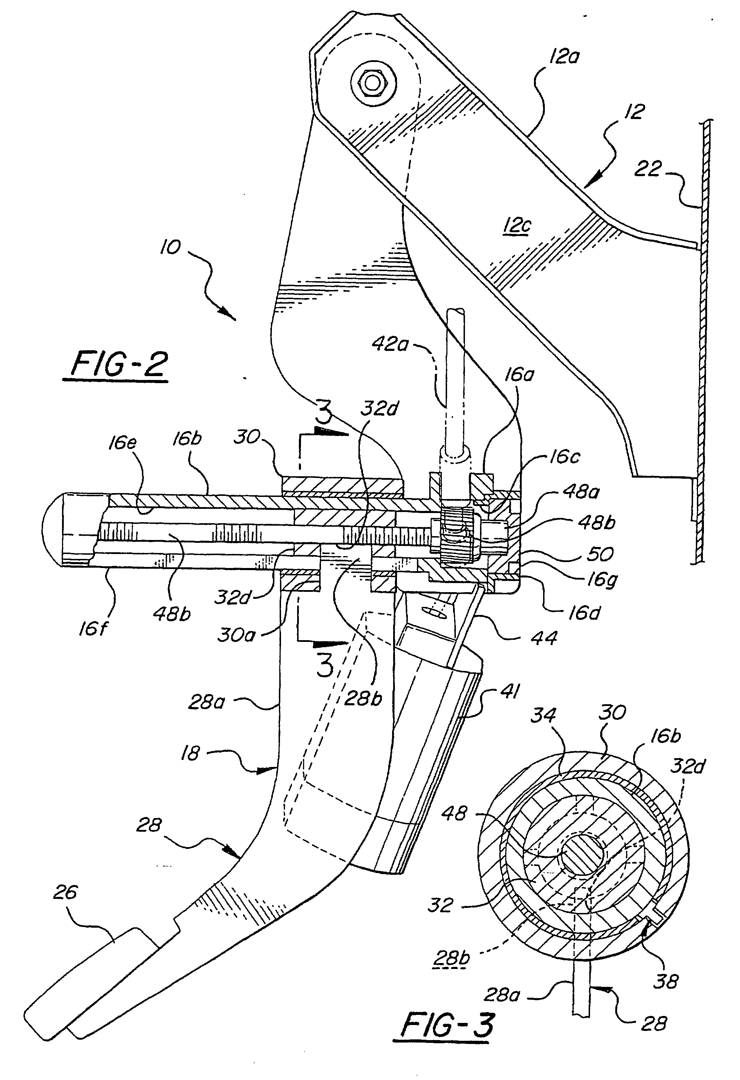

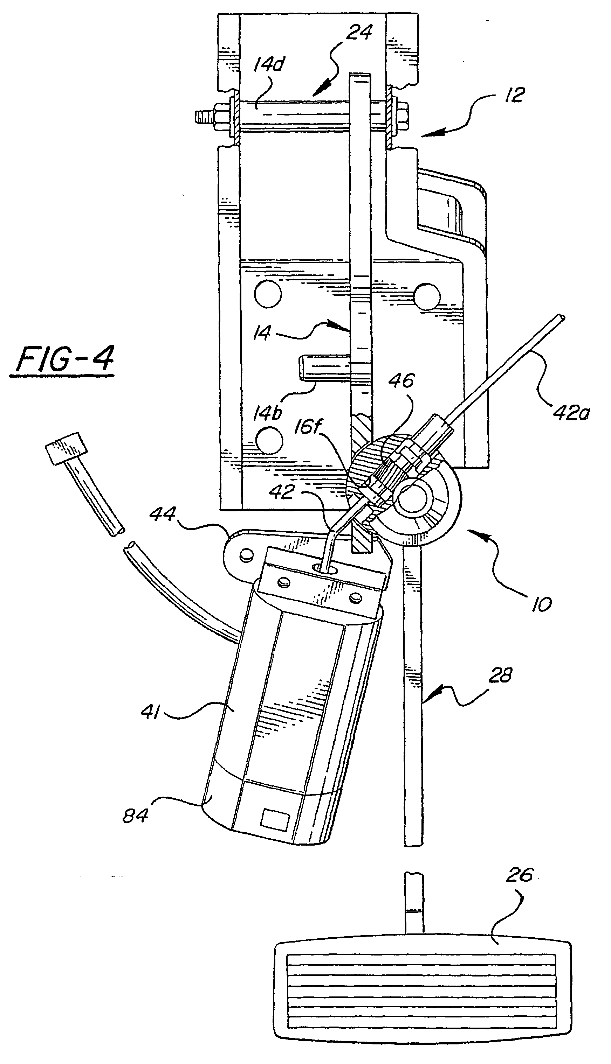

The brake pedal assembly of the first embodiment of the invention includes (Figures 1-5) a mounting bracket 12, a pivot arm 14, a guide rod structure 16, a pedal assembly 18, and a drive assembly 20. Mounting bracket 12 may be formed of any suitable sheet metal material in a suitable stamping operation and is intended for suitable securement to the firewall 22 of the associated motor vehicle. Bracket 12 includes a top wall 12a, laterally spaced upwardly extending side walls 12b and 12c, and a front wall 12d.

Pivot arm 14 includes a main body portion 14a, a brake rod attachment pivot 14b for attachment of a brake actuator rod, a lower window 14c, and an upper spacer hub structure 14d. Pivot arm 14 is pivotally mounted at its upper end between bracket side walls 12b and 12c by a screw and bushing assembly 24 positioned in bracket apertures 12e.

Guide rod structure 16 has an elongated, circular, tubular configuration and includes a forward transmission housing portion 16a and a shaft portion 16b.

Transmission housing portion 16a is enlarged relative to shaft portion 16b and defines a central bore 16c opening at the forward end 16d of the rod structure.

Shaft portion 16b extends rigidly rearwardly from transmission housing portion 16a, defines a central bore 16e coincident with bore 16c, is open at its rear end, and includes a bottom axial slot 16f. Slot 16f extends forwardly from a location proximate transmission housing portion 16a and opens at the front end 16e of the shaft portion.

Pedal assembly 18 includes a pedal pad 26, a pedal arm 28 carrying the pedal pad 26 at its lower end, and an upper guide structure 29.

Pedal arm 28 includes a main body portion 28a and a reduced width upper end portion 28b.

Upper guide structure 29 includes a hub structure 30 and a nut 32. The reduced width upper end portion 28b of the pedal arm passes upwardly through a bottom slot 30a in hub structure 30 to position upper end portion 28b in the hollow of the hub structure whereafter the pedal arm and hub are welded together to form a unitary pedal arm/hub assembly.

Hub structure 30 is sized to be slidably mounted on rod structure shaft portion 16b with the aid of a split bushing 34 positioned within the hub structure. Hub structure 30 and bushing 34 will be seen to coact to define a smooth guide bore slidably receiving rod structure shaft portion 16b whereby to enable the pedal assembly to move smoothly axially forwardly and rearwardly with respect to the rod structure.

Nut 32 may be formed of plastic, has a circular cross-sectional configuration, is sized to fit slidably within the bore 16a of the rod structure shaft portion, and includes a threaded central bore 32a. Nut 32 may include axial and circumferential ribs 32b, 32c to minimize weight and minimize sliding friction between the nut and the rod shaft portion.

Nut 32 is positioned on the upper end of pedal arm 28 with the reduced width upper end portion 28b nested in a downwardly opening slot or pocket 32d in the bottom of the nut.

Bushing 34, in addition to split 34a, includes an axially extending slot 34b and a window 34c. Slot 34b accommodates the pedal arm upper end portion 28b and window 34c accommodates a leaf spring 38 (Figures 1, 3 and 5).

Leaf spring 38 includes a main body portion 38a positioned in window 34c and end tab portions 38b positioned in axially spaced apertures 30a in hub structure 30. With tabs 38b positioned in apertures 30a, main body portion 38a of the spring is positioned within and passes through window 34c to act against rod shaft portion 16b at the interface between the rod shaft portion and bushing 34.

The open rear end 16e of the rod structure is closed by a disc-shaped nose piece 39 which fits over the open rear end of the rod structure and is held in place by a rolled pin 40 passing through diametrically opposed apertures 16g in the rear end of the rod structure and through apertures in diametrically opposed lugs 39a on nose piece 39.

Drive assembly includes a motor 41, a Bowden cable 42, a bracket 44, a worm gear 46, and an elongated drive member 48.

Motor 41 comprises a small electric DC motor of known form.

Bracket 44 is fixedly secured to the lower end of pivot arm 14 and mounts motor 41 utilizing suitable thread cutting screws 50.

Worm gear 46 is journaled in a chordal bore 16f in transmission housing 16a.

Cable 42 is driven by the output shaft of motor 41 and drivingly engages worm gear 46 whereby energization of the motor rotates worm gear 46.

Elongated drive member 48 includes a forward journal portion 48a, a worm wheel portion 48b, and a rearwardly extending screw shaft portion 48c.

Drive member 48 is positioned in the hollow of rod structure 16 with forward journal portion 48a journaled in a retainer 50 suitably positioned in a counterbore 16g in the open front end of the rod structure, worm wheel 48b drivingly engaging worm gear 46, and screw shaft portion 48 threadably engaging nut 32a so that energization of motor 41 has the effect of sliding nut 32 forwardly and rearwardly within bore 16e whereby to adjust pedal assembly 18 forwardly and rearwardly along the rod structure.

To assemble the first embodiment of the invention pedal apparatus, a weldment is formed by welding the transmission portion 16a of the rod structure within the window 14c of the pivot arm 14 and welding the motor bracket 44 to the lower end of the pivot arm; the weldment is mounted on bracket 12 using bolt assembly 24; the upper end 28b of pedal arm 28 is moved upwardly through the slot 30a in the hub 30 and welded in position; nut 32 is positioned on top of pedal arm portion 28b; spring 38 is positioned on the inner periphery of the hub 30 with end tabs 38b positioned in apertures 30a; bushing 34 is installed in hub 30 by pushing the bushing rearwardly into the hub with slot 34b aligning with and moving around pedal arm upper portion 28b, window 34c moving into position over spring 38, and flange 34d on the rear end of the bushing coacting with the rear end 30b of the hub to preclude forward movement of the bushing relative to the hub and upper pedal arm portion 28b coacting with slot 34d to preclude rearward movement of the bushing relative to the hub; the pedal assembly is offered up to rod structure 16 with the hub 30 slipping over the outer periphery of shaft portion 16b of the rod structure, upper pedal arm portion 28b moving into slot 16f, and nut 32 moving to a nested position within the hollow of shaft portion 16b; drive member 48 is inserted into the forward end of the rod structure to threadably engage screw shaft portion 48c with nut 32; drive member 48 is spun manually to move nut 32 to a desired axial position within the rod structure; retainer 50 is positioned within counterbore 16g in the forward end of the rod structure to journal the journal portion 48a of the drive member whereafter the retainer is held in position either by a snap ring or by suitable peening; worm gear 46 is positioned in bore 16f in driving engagement with worm wheel portion 48b of the drive member 48; nose piece 39 is positioned on the rearward end of the rod structure utilizing roll pin 40; motor 41 is mounted on motor bracket 44 utilizing thread cutting screws 50; and cable 42 is drivingly interconnected between the output of the motor and worm gear 46.

The brake pedal assembly is now ready for delivery to a motor vehicle manufacturer whereat installation in the motor vehicle is accomplished simply by securing bracket 12 to the firewall of the vehicle and attaching the brake actuator rod 49 of the motor vehicle to pivot 14b.

In operation, the position of the brake pad 26 relative to the driver's seat 50 of the motor vehicle and relative to the operator is selectively adjusted by selectively energizing motor 41 to selectively move nut 32 forwardly and rearwardly within the bore 16e of rod structure 16 and thereby, via the driving interconnection between the nut and the pedal assembly, move the pedal assembly selectively forwardly and rearwardly along the rod structure.

Although the invention has thus far been described with respect to an adjustable brake pedal assembly 10, it will be understood that the invention would normally be applied to both the brake and accelerator pedal assemblies of a motor vehicle and the control pedals would be selectively adjusted simultaneously.

Thus, as seen in Figure 6, the adjustable brake pedal apparatus 10 may be adjusted according to the invention in conjunction with an adjustable accelerator pedal control apparatus 60 so that the brake pad 26 of the brake pedal apparatus and the accelerator pad 62 of the accelerator pedal apparatus are moved simultaneously. This may be accomplished as seen in Figure 6 by extending the cable 42 from the brake pedal control apparatus 10 to the accelerator control apparatus 60 with the extended cable 42a driving a worm gear 63 journaled in the transmission housing portion 64a of the guide rod structure 64 of the accelerator pedal mechanism to drive the worm wheel portion 66b of an elongated drive member 66 positioned within the guide rod structure 64 and including a screw shaft portion 66c for engagement with the nut 70 positioned within the shaft portion 64b of rod structure 64 to move the accelerator pedal arm 72 forwardly and rearwardly along the rod structure, all in the manner previously described with respect to brake pedal assembly 10.

Transmission housing portion 64a of guide rod structure 64 is weldingly positioned in a window 74a formed in a pivot arm 74 mounted for pivotal movement at its lower end about a pivot axis 76 defined by a mounting bracket 77 secured to the vehicle firewall. Pivot arm 74 includes a cable attachment structure 74b at its upper end for attachment of an accelerator cable 78 and the apparatus further includes a cable bracket 80 secured to pivot arm 74 and operative to mount cable extension 42a in an manner to facilitate the driving connection of the cable extension to worm gear 63.

With the arrangement seen in Figure 6, energization of the single motor 41 associated with the brake pedal assembly 10 has the effect of simultaneously adjusting both the brake pedal pad 26 and the accelerator pedal pad 62.

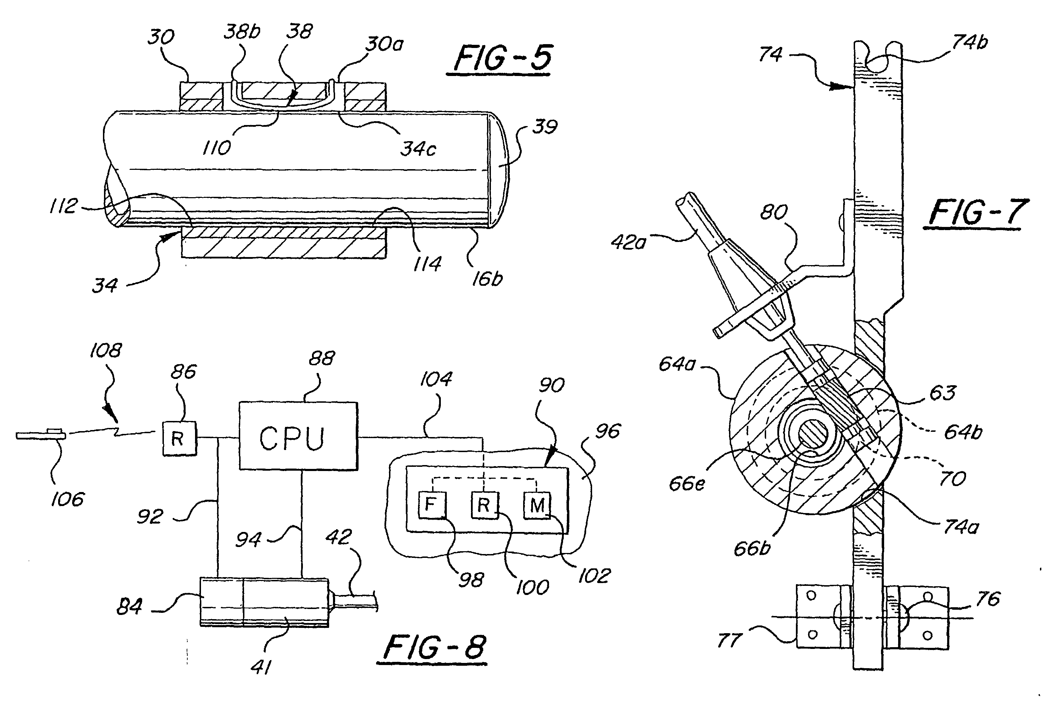

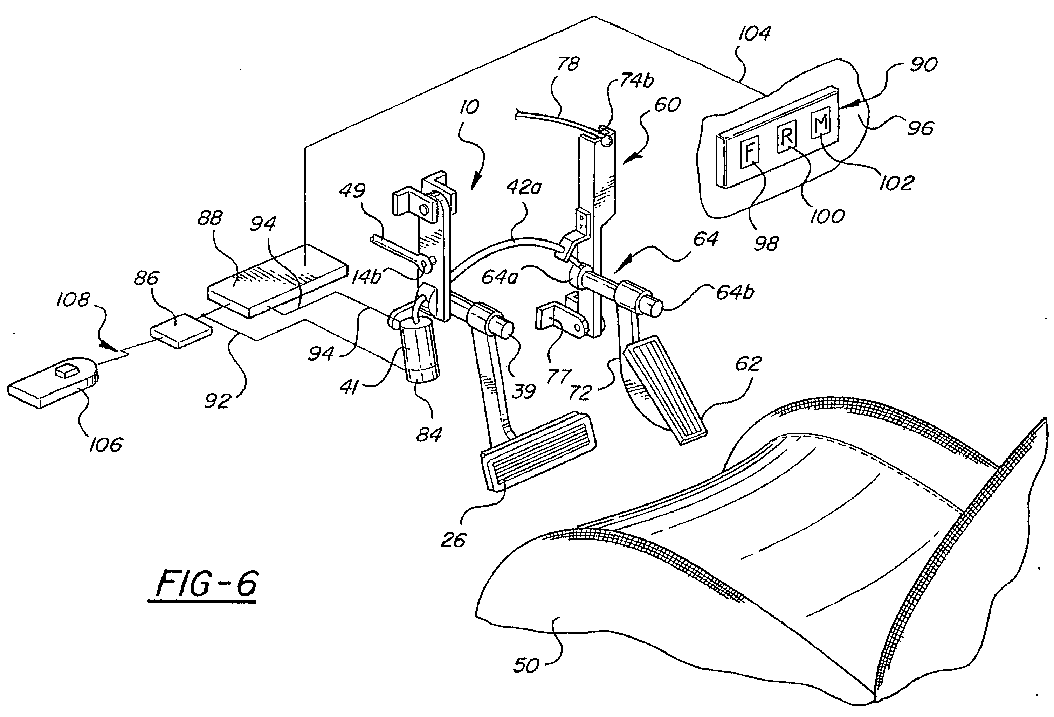

A control circuit for motor 41 is seen in Figures 6 and 8 where the control circuit, in addition to motor 41, includes a potentiometer module 84, a receiver 86, a CPU or microprocessor 88, and a control panel 90.

Potentiometer 84 attaches to the end of motor 41 remote from the motor output shaft and functions to count the revolutions of the motor and generate a signal on lead 92 indicative of the number of counted motor revolutions.

CPU 88 may comprise an existing computer already on board the vehicle. CPU 88 receives motor shaft position information from potentiometer 84 via line 92 and controls motor 41 via a lead 94.

Control panel 90 may be positioned in the instrument panel 96 of the vehicle at a location convenient to an operator positioned on seat 50 and may include a forward button 98, a rearward button 100, and a memory button 102. Control panel 90 is suitably connected to CPU 88 via a lead 104.

In the use of the first embodiment of the invention control pedal assembly, the control pedal assemblies may be adjusted fore and aft by an operator seated on seat 50 simply by pushing forward and rearward buttons 98 and 100 selectively until the control pedal assemblies assume the desired comfortable positions for the operator or, alternatively, the control pedal assemblies may be moved automatically to preset positions utilizing a remote transmitter 106 carried on the person of the operator and operative to transmit a signal 108 to receiver 86 having a code peculiar to the operator.

In the use of the remote transmitter 106 the seated operator moves the pedal assemblies to their desired positions using forward and rearward buttons 98/100 and thereafter presses memory button 102 so as to store a setting in the memory of the computer for that particular driver corresponding to settings of the control pedal assemblies accommodating that particular driver. Thereafter, as the driver approaches the vehicle, transmitter 106 may be utilized to transmit a signal to receiver 86 coded to signal the computer to access the computer memory setting for the respective driver and actuate the motor in a sense to move the pedal assemblies to the settings accommodating the respective driver.

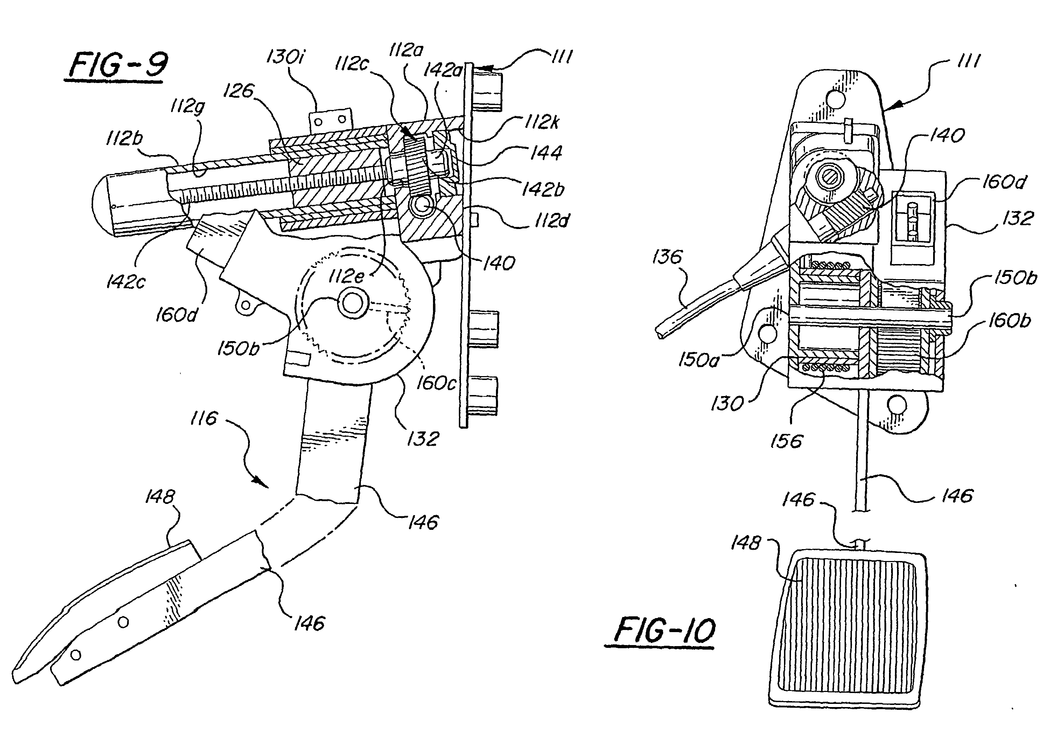

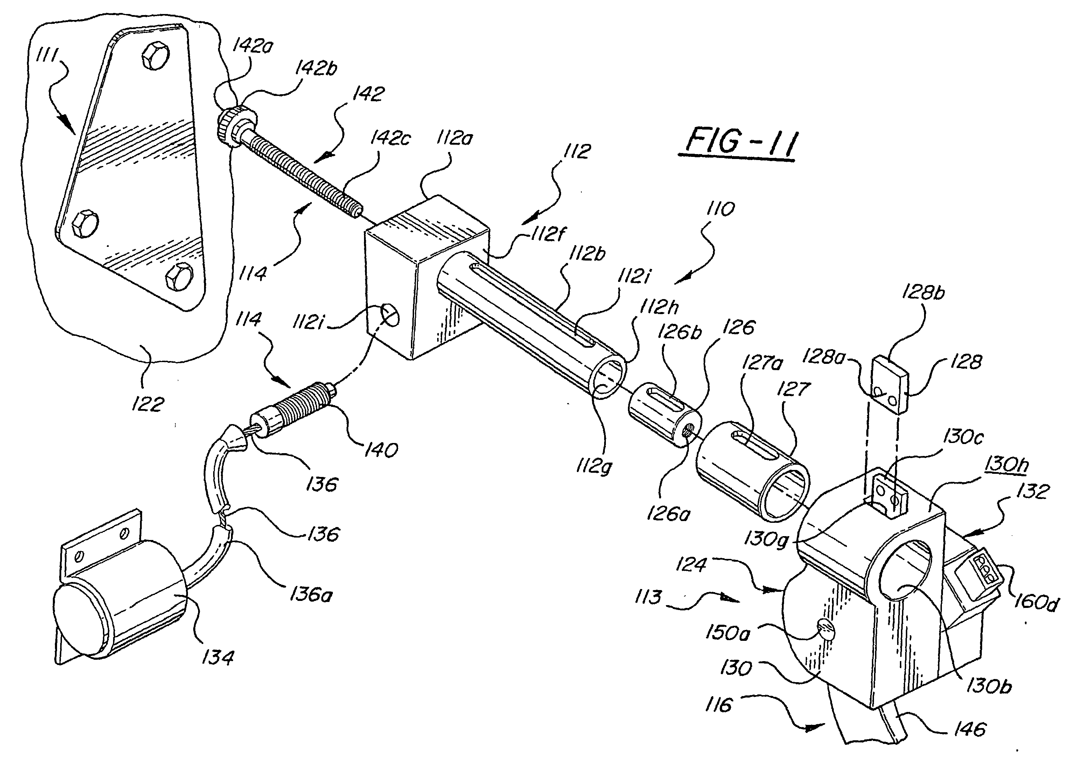

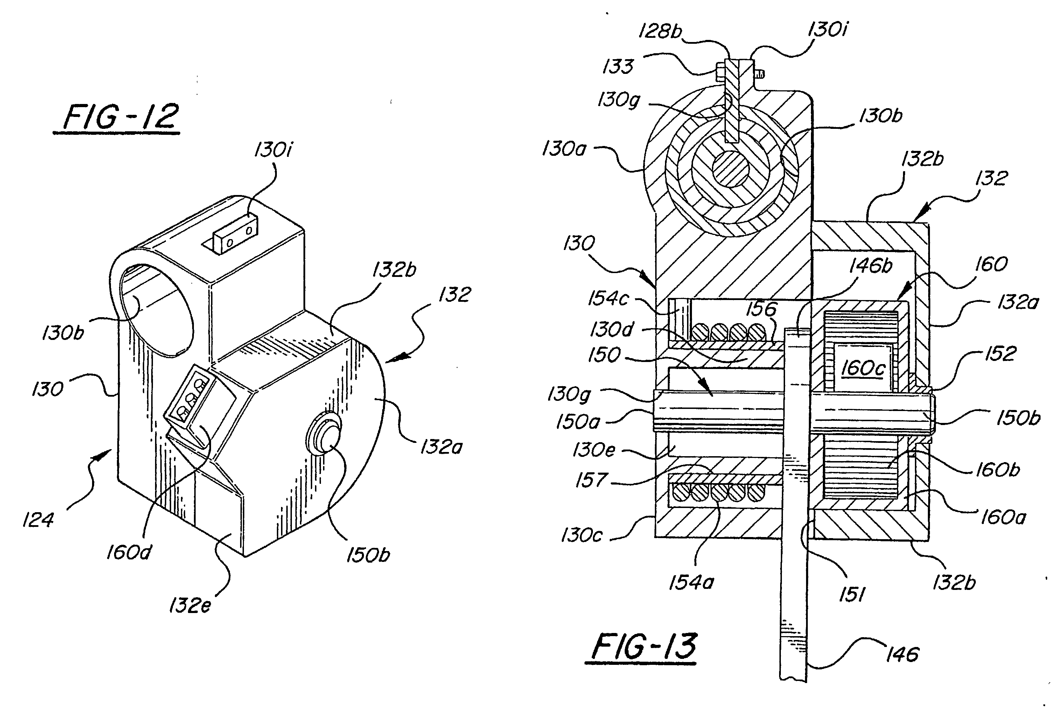

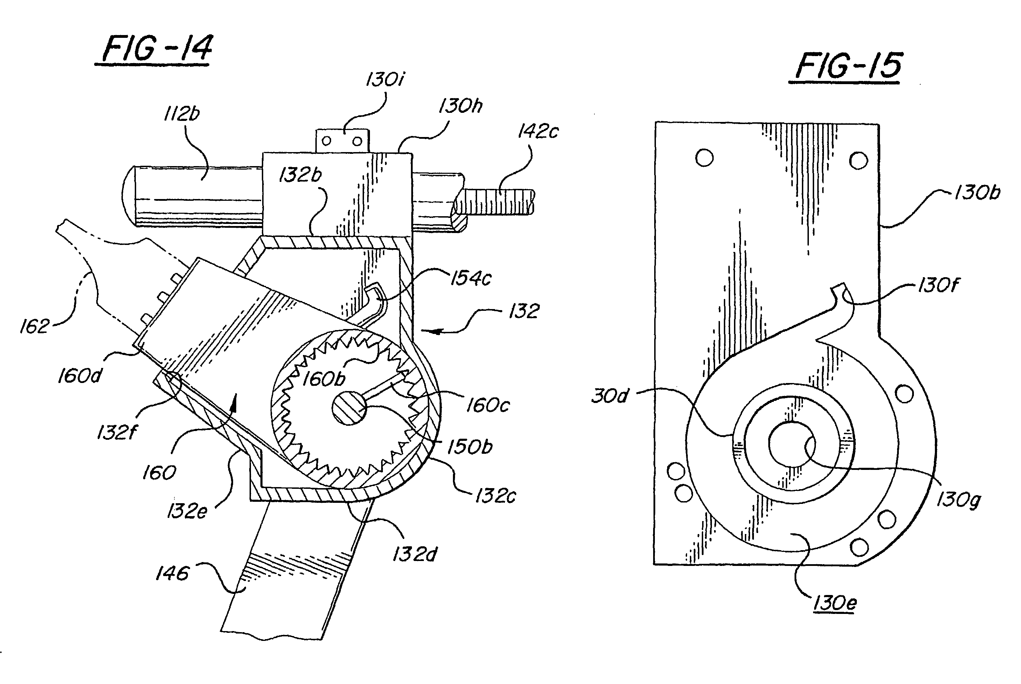

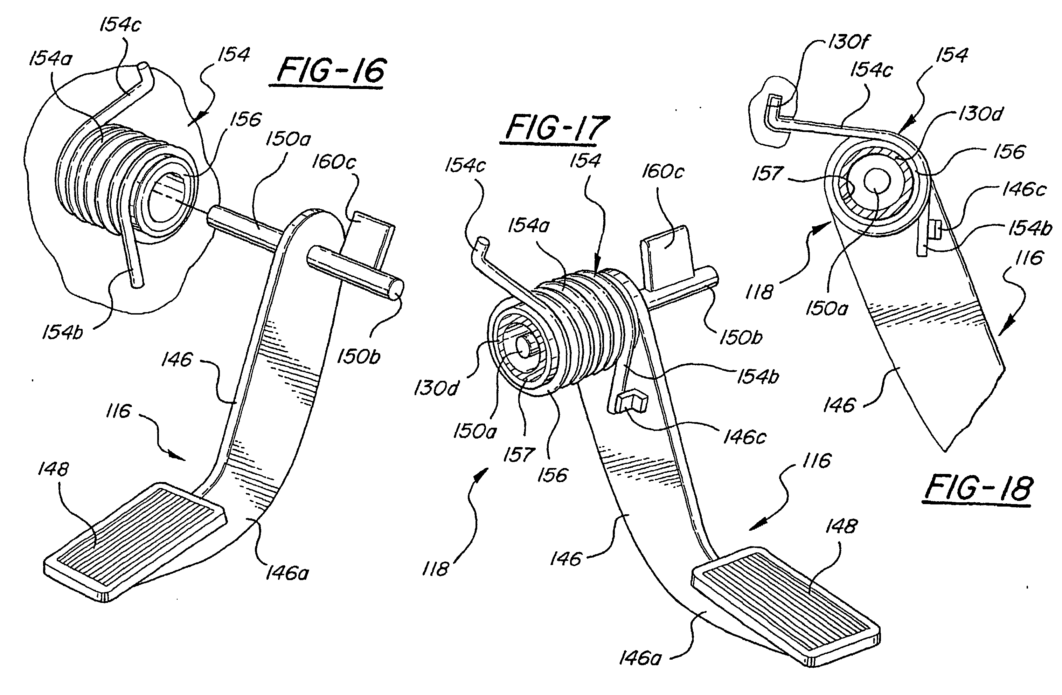

The second embodiment of the invention seen in Figures 9-18 will now be described. Accelerator pedal assembly 110 of the second embodiment, broadly considered, is intended to allow efficient fore and aft movement of the pedal assembly to accommodate operators of varying anatomical dimension and is operative to generate an electronic or drive-by-wire signal in response to pivotal movement of the pedal assembly while retaining the same ergometric operation of the pedal irrespective of the position of adjustment of the pedal.

Pedal assembly 110 includes a mounting bracket 111, a guide structure 112, a carrier assembly 113, a drive assembly 114, a pedal assembly 116, a resistance assembly 118, and a generator means 120.

Mounting bracket 111 is adapted to be suitably secured to the dash panel 122 of the associated motor vehicle, utilizing suitable fastener means, in known manner.

Guide structure 112 includes a transmission housing portion 112a and a guide rod portion 112b. Transmission housing portion 112a is suitably secured to and extends rearwardly from bracket 111 and has a generally cubicle configuration defining an axial bore 112c opening at the front face 112d of the housing portion and further defining a central bore 112e in a rear wall 112f of the housing portion concentric with bore 112c.

Guide rod portion 112b extends rigidly rearwardly from the rear wall 112f of the transmission housing portion, is hollow so as to provide a tubular configuration defining a central circular axial bore 112g concentric with bores 112c and 112e, is open at its rear end 112h, and includes an upper axial slot 112i extending from a location proximate the transmission housing wall 112f to a location proximate guide rod rear end 112h.

Carrier assembly 113 includes a housing 124, a nut 126, a bushing 127, and a key 128.

Housing 124 is designed to move slidably along the guide rod portion 112b of guide structure 112 and preferably is formed of left and right molded acetal plastic sections 130 and 132 which are suitably joined together along a vertical plane by the use of fasteners, heat sealing or other means.

Left housing section 130 includes an upper portion 130a defining a through axial bore 130b and a lower portion 130c defining an annular hub structure 130d and an annular spring chamber 130e in concentric surrounding relation to hub structure 130d and including a tail portion 130f.

Housing 124 is mounted on the guide rod portion 112b of guide structure 112 with bushing 127 positioned in bore 130b and guide rod portion 112b positioned slidably within bushing 127 so as to mount the housing for sliding movement along the guide rod.

Right housing section 132 is generally hollow and includes an outer side wall 132a, a top wall 132b, a front wall 130c, a bottom wall 130d, and an angled rear wall 132e defining an opening 132f.

Nut 126 is circular, preferably plastic, is mounted for sliding movement in circular bore 112g of guide rod 112b, and defines a central threaded bore 126a.

Key 128 is seated at its lower end 128a in a notch or pocket 126b in the upper periphery of nut 126 and passes upwardly through a slot 127a in bushing 127, through guide rod slot 112i, and through an opening 130g in the top wall 130h of left housing section 130 for securement at its upper end 128b, by fasteners 133, to a flange structure 130i upstanding from left housing section top wall 130h. Key 128 thus lockingly interconnects nut 126 and housing 124 so that movement of nut 126 in bore 112g is imparted to housing 124 so as to move housing 124 axially along guide rod portion 112b.

Drive assembly 114 includes a motor 134, a cable 136, a bracket 138, a worm 140, a worm gear 140, and an elongated drive member 142.

Motor 134 comprises a suitable electric motor, with position memory if required, and is suitably secured to dash panel 122 proximate bracket 111.

Cable 136 comprises a well-known Bowden cable and is drivingly secured at one end 136a to the output shaft of motor 134. The other end 136b of cable 136 is drivingly attached to worm gear 140.

Worm gear 140 is suitably journaled in an upwardly angled bore 112j in transmission housing 112a in angled underlying relation to bore 112c.

Drive member 142 includes a front journal portion 142a, a worm wheel 142b, and a rear screw shaft portion 142c. Drive member 142 is positioned within guide structure 112 with journal portion 142a journaled in a retainer 144 positioned in a counterbore 112k in the front end of transmission housing 112a, worm wheel 142b drivingly engaging worm gear 140, and screw shaft 142c extending rearwardly through bore 112e and centrally within guide rod structure 112b for threaded engagement with the threaded central bore 126a of nut 126. It will be seen that actuation of motor 134 has the effect of rotating screw shaft 142c to thereby move nut 126 and housing 124 fore and aft along guide rod 112b with the extent of forward and rearward movement defined and limited by engagement of key 128 with the front and rear ends of slot 112i.

Pedal assembly 116 includes a pedal arm 146, a pedal pad 148 secured to the lower end 146a of the pedal arm, and a pivot shaft 150. Pedal arm 146 passes upwardly through a slot 151 defined in housing 124 at the lower juncture of left and right housing sections 130 and 132. Pivot shaft 150 is fixedly secured to the upper end 146b of the pedal arm and includes a left portion 150a journaled in an aperture 130g in the outboard face of left housing section 130 concentrically within hub structure 130d and a right portion 150b journaled in side wall 132a of right housing section 132 utilizing a bushing 152.

Resistance assembly 118 includes the hub portion 130d of left housing section 130 and further includes a coil spring 154 and a sleeve 156. Resistance assembly 118 is intended to provide feedback or "feel" to the operator to replace the feedback normally provided by the mechanical linkage interconnecting the accelerator pedal and the fuel throttle. With a mechanical linkage, the pedal pressure required when advancing the accelerator pedal is greater than that required to maintain a fixed position. This difference is often referred to as due to the hysteresis effect. This effect is important in maintaining the accelerator pedal in position while driving at a relatively constant speed and it must also be considered in achieving a desired deceleration time. The pressure which must be applied in accelerating is easily borne but if the back pressure of an accelerator spring produced the same effect during the time it was required to retain or maintain speed it would soon become uncomfortable for the operator to maintain a relatively constant speed. The hysteresis effect provides relief. It lessens the load required to maintain a setting of the accelerator yet there is still force to cause reverse pedal action when the foot applied pressure is removed. Resistance assembly 118 provides the "feel" of a mechanical linkage including the desired hysteresis effect to relieve operator fatigue.

Sleeve 156 may be formed, for example, of a Delrin® plastic material and is positioned with a friction fit over hub structure 130d to define an annular plastic-to-plastic frictional interface 157.

Spring 154 comprises a helical spring and is preferably formed of a suitable ferrous material. Spring 154, in addition to the primary convolutions 154a, includes a pedal tail portion 150b and a housing tail portion 150c. Spring 154 is positioned in spring chamber 130e with the primary convolutions 154a in tight, surrounding relation to sleeve 156, pedal tail portion 154 engaging a tab 146c struck from pedal arm 146, and housing tail portion 154c positioned in the tail portion 130f of spring chamber 130e.

Generator means 120 comprises a potentiometer 160 positioned within the hollow of right housing section 132 and suitably secured to housing side wall 132a. Potentiometer 160 includes a central shaft, constituted by pivot shaft portion 150b, a housing 160a concentric with shaft portion 150b, a plurality of resistance elements 160b mounted circumferentially around the inner periphery of housing 160a in side-by-side relation, a wiper arm 160c mounted on shaft portion 150b and operative to electrically slidably engage the resistance elements 160b in response to pivotal movement of shaft 150, and an outlet 160d projecting rearwardly through opening 132f in right housing rear wall 132e and electrically connected to wiper 160c and resistance elements 160b in a manner such that the electrical signal appearing at the outlet 160d varies in proportion to the extent of pivotal movement of pivot shaft 150. It will be seen that pivotal movement of pedal assembly 116 has the effect of rotating pivot shaft portion 150b and thereby varying the electrical signal appearing at the potentiometer outlet 160d so that the signal appearing at outlet 160d is at all times proportioned to and indicative of the pivotal position of the pedal. It will be understood that electric power is suitably supplied to potentiometer 160 and an electrical conduit 162 is suitably connected to potentiometer outlet 160d and extends to the vehicle function or accessory, such as the vehicle throttle, that is being electrically controlled by the pedal assembly.

In the operation of the second embodiment of the invention adjustable pedal assembly, the position of pedal pad 148 relative to the operator is selectively adjusted by selectively energizing motor 134 to selectively move nut 126 forwardly and rearwardly within guide rod bore 112g and thereby, via key 128, move the pedal assembly selectively forwardly and rearwardly along guide rod 112b with the limits of forward and rearward movement determined by engagement of key 128 with the respective forward and rearward ends of slot 112i. In any position of adjustment of the pedal, actuation of the pedal or release of the pedal results, in the manner previously described, in the generation of an output signal at the outlet 160d proportioned to the extent of pivotal movement. Since the pivotal movement of the pedal arm is precisely the same in any position of adjustment of the pedal structure, the ergometrics of the assembly do not vary irrespective of the position of adjustment of the pedal assembly and irrespective of the anatomical stature of the operator.

As the pedal is moved downwardly, a "feel" is imparted to the pedal, simulating the feel of a mechanical linkage between the pedal and the controlled vehicle system, by the combined effect of torsioning of the coil spring 154 and frictional sliding or wiping engagement between sleeve 156 and hub structure 130d at frictional interface 157. That is, as force is applied to move the pedal downwardly, the feel imparted is additive and is equal to the combined torsional resistance of spring 154 and the frictional resistance generated at annular interface 157 between sleeve 156 and hub structure 130d. It will be seen that just as the torsional resistance provided by spring 154 increases in proportion to the extent of downwardly pivotal pedal movement, so also does the frictional resistance at interface 157 progressively increase due to the progressively greater squeezing force exerted on sleeve 156 by the progressively tightening spring 154. As the pedal is thereafter released or allowed to return under the impetus of spring 154, the gradually decreasing frictional force at interface 157 becomes subtractive rather than additive with respect to the gradually decreasing torsional spring force, thereby creating the desired hysteresis effect. The amount of feel imparted to the pedal can thus be precisely adjusted by adjusting the spring rate or other parameters of spring 154, and/or by adjusting the materials or other parameters of sleeve 156 and hub structure 120d, thereby rendering it relatively easy to fine tune the system to achieve any desired feel and any desired hysteresis effect.

The invention adjustable control pedal apparatus will be seen to have many important advantages. Specifically, the design and structure of the pedal assembly facilitates the ready manufacture of each element of the pedal assembly and facilitates the ready assembly of the various elements, thereby reducing the overall cost of the total assembly. Further, the invention pedal assembly design requires fewer parts than prior art designs, provides a better running fit for the assembly, and enhances the ability to hold manufacturing and assembly tolerances. Further, the specific bushing and leaf spring assembly interposed between the hub structure of the pedal assembly and the shaft portion of the rod structure establishes a triangulated sliding interface (Figure 5) as between the hub structure and the rod structure with one point 110 established by the interface of the spring with the rod structure along one side face of the rod structure and the other two points 112, 114 established at the respective ends of the bushing at a location diametrically opposed to the interface between the spring and the rod structure. This triangulated interface has the effect of eliminating judder as the hub structure moves along the rod structure in response to energization of the motor to thereby provide a smooth, quiet and reliable adjusting movement of the pedal assembly along the rod structure.

The invention will be also seen to provide an electronic adjustable pedal assembly for a motor vehicle in which the assembly may be readily adjusted to accommodate operators of varying anatomical dimensions, in which the ergometrics of the system remain constant irrespective of the position of adjustment of the pedal structure, and in which the desired hysteresis effect is provided in any position of adjustment of the pedal structure.

Whereas preferred embodiments of the invention have been illustrated and described in detail, it will be apparent that various changes may be made in the disclosed embodiments without departing from the scope of the invention.

## Claims

1. An adjustable pedal apparatus (10) for a motor vehicle, comprising a mounting structure (12), a hollow guide means (16) extending rearwardly from the mounting structure (12), a pedal structure (18) including a guide structure (29) slidably mounted on the hollow guide means (16) and a pedal arm (28) extending downwardly from the guide structure (16), a nut (32) and a screw shaft (48) positioned in the hollow guide means (16), the screw shaft (48) threadably engaging the nut (32), drive means (28b,30a) drivingly connecting the nut (32) and the pedal structure (18) and means (41) for rotating the screw shaft (48), **characterised in that** the hollow guide means is a hollow guide rod (16).

2. An apparatus according to claim 1 wherein:
the mounting structure is a mounting bracket (12); and a pivot arm (24) is pivotally secured to the mounting bracket.

3. An apparatus according to claim 1 wherein:
an elongated slot (16f) is provided in the hollow guide rod (16): and
the interconnecting means comprises rigid structure (28b) passing through the slot and rigidly interconnecting the nut and guide structure.

4. An apparatus according to claim 1 wherein:
the guide rod (16) and the guide bore (16e) have a circular cross sectional configuration.

5. A pedal apparatus according to claim 1 wherein:
the apparatus includes a housing (16a) positioned forwardly of the guide rod (16); and the means (41) for rotating the shaft includes a first transmission member driving the screw and a second transmission member (46) driving the first transmission member (48b), said members positioned in the housing.

6. A pedal apparatus according to claim 5 wherein:
the apparatus includes an electric motor (41) and a cable (42) driven by the electric motor and driving the second transmission member (46).

7. An adjustable pedal apparatus according to claim 1 wherein:
an elongated slot (16f) is provided in the hollow guide rod (16);
the guide structure comprises a hub structure (30) including an axial slot (30a) aligned with the slot (16f) in the rod;
the pedal arm includes an upper end portion (28b) extending upwardly through the hub structure slot (30a), through the rod slot (16f), and into the hollow of the hub structure; and the nut (32) is positioned on the upper end of the pedal arm upper end portion (28b).

8. An adjustable pedal apparatus according to claim 1 wherein the apparatus further includes:
a bushing (34) positioned between the guide structure (29) and the rod (16) and including an opening; and
a spring (38) mounted on the inner periphery of the guide structure (29) and passing through the opening of the bushing (34) to act against the rod (16) at the interface between the rod and the bushing.

## Patentansprüche

1. Einstellbare Pedalvorrichtung (10) für ein Kraftfahrzeug, die folgendes aufweist: eine Montagekonstruktion (12), eine hohle Führungseinrichtung (16), die sich von der Montagekonstruktion (12) nach hinten erstreckt, eine Pedalkonstruktion (18), die eine Führungskonstruktion (29), die an der hohlen Führungseinrichtung (16) gleitbar angebracht ist, und einen Pedalarm (28) aufweist, der sich von der Führungskonstruktion (16) nach unten erstreckt, eine Mutter (32) und einen Bolzenschaft (48), der in der hohlen Führungseinrichtung (16) positioniert ist, wobei der Bolzenschaft (48) mit der Mutter (32) in Gewindeeingriff ist, eine Antriebseinrichtung (28b, 30a), die die Mutter (32) und die Pedalkonstruktion (18) antriebsmäßig verbindet, und eine Einrichtung (41) zum Drehen des Bolzenschafts (48),
**dadurch gekennzeichnet,**
**daß** die hohle Führungseinrichtung eine hohle Führungsstange (16) ist.

2. Vorrichtung nach Anspruch 1,
wobei die Montagekonstruktion eine Montagehalterung (12) ist; und
wobei ein Schwenkarm (24) an der Montagehalterung schwenkbar befestigt ist.

3. Vorrichtung nach Anspruch 1,
wobei ein langgestreckter Schlitz (16f) in der hohlen Führungsstange (16) vorgesehen ist; und
wobei die Verbindungseinrichtung eine steife Konstruktion (28b) aufweist, die durch den Schlitz verläuft und die Mutter und die Führungskonstruktion starr miteinander verbindet.

4. Vorrichtung nach Anspruch 1,
wobei die Führungsstange (16) und die Führungsbohrung (16e) eine kreisförmige Querschnittskonfiguration haben.

5. Pedalvorrichtung nach Anspruch 1,
wobei die Vorrichtung ein Gehäuse (16a) aufweist, das vor der Führungsstange (16) positioniert ist; und
wobei die Einrichtung (41) zum Drehen des Schafts ein erstes Übertragungselement, das den Bolzen treibt, und ein zweites Übertragungselement (46) aufweist, das das erste Übertragungselement (48b) treibt, wobei die Elemente in dem Gehäuse positioniert sind.

6. Pedalvorrichtung nach Anspruch 5,
wobei die Vorrichtung einen elektromotor (41) und ein Kabel (42) aufweist, das von dem Elektromotor angetrieben wird und das zweite Übertragungselement (46) antreibt.

7. Einstellbare Pedalvorrichtung nach Anspruch 1,
wobei ein langgestreckter Schlitz (16f) in der hohlen Führungsstange (16) vorgesehen ist;
wobei die Führungskonstruktion eine Nabenkonstruktion (30) aufweist, die einen axialen Schlitz (30a) besitzt, der mit dem Schlitz (16f) in der Stange ausgefluchtet ist;
wobei der Pedalarm einen oberen Endbereich (28b) aufweist, der sich nach unten durch den Nabenkonstruktionsschlitz (30a), durch den Stangenschlitz (16f) und in den Hohlraum der Nabenkonstruktion erstreckt; und
wobei die Mutter (32) an dem oberen Ende des oberen Endbereichs (28b) des Pedalarms positioniert ist.

8. Einstellbare Pedalvorrichtung nach Anspruch 1,
wobei die Vorrichtung ferner folgendes aufweist:
- eine Hülse (34), die zwischen der Führungskonstruktion (29) und der Stange (16) positioniert ist und eine Öffnung aufweist; und
- eine Feder (38), die an dem Innenumfang der Führungskonstruktion (29) angebracht ist und so durch die Öffnung der Hülse (34) verläuft, daß sie an der Grenzfläche zwischen der Stange und der Hülse auf die Stange (16) wirkt.

## Revendications

1. Dispositif à pédale réglable (10) pour un véhicule à moteur, comprenant une structure de support (12), un moyen de guidage creux (16) s'étendant vers l'arrière à partir de la structure de support (12), une structure de pédale (18) comprenant une structure de guidage (29) montée en vue de son coulissement sur le moyen de guidage creux (16) et un bras de pédale (28) s'étendant vers le bas à partir de la structure de guidage (16), un écrou (32) et un arbre à vis (48) positionné dans le moyen de guidage creux (16), l'arbre à vis (48) se mettant en prise par vissage avec l'écrou (32), des moyens d'entraînement (28b, 30a) reliant en vue de leur entraînement l'écrou (32) et la structure à pédale (18) et des moyens (41) pour assurer la rotation de l'arbre à vis (48), **caractérisé en ce que** le moyen de guidage creux est une tige de guidage creuse (16).

2. Dispositif à pédale selon la revendication 1, selon lequel :
la structure de support est un support de fixation (12) ; et un bras de pivot (24) est fixé en vue de son pivotement au support de fixation.

3. Dispositif selon la revendication 1, selon lequel :
une fente allongée (16f) est ménagée dans la tige de guidage creuse (16) ; et
le moyen de raccordement comprend une structure rigide (28b) passant dans la fente et reliant avec rigidité l'écrou à la structure de guidage.

4. Dispositif selon la revendication 1, selon lequel :
la tige de guidage (16) et l'alésage de guidage (16^{e}) présentent une configuration circulaire en coupe transversale.

5. Dispositif à pédale selon la revendication 1, selon lequel :
le dispositif comprend un logement (16a) positionné vers l'avant de la tige de guidage (16) ; et le moyen (41) pour assurer la rotation de l'arbre comprend un premier élément de transmission entraînant la vis et un deuxième élément de transmission (46) entraînant le premier élément de transmission (48b), lesdits éléments étant positionnés dans le logement.

6. Dispositif à pédale selon la revendication 5, selon lequel :
le dispositif comprend un moteur électrique (41) et un câble (42) entraîné par le moteur électrique et entraînant le deuxième élément de transmission (46).

7. Dispositif à pédale réglable selon la revendication 1, selon lequel :
une fente allongée (16f) est ménagée dans la tige de guidage creuse (16);
la structure de guidage comprend une structure de moyeu (30) comportant une fente axiale (30a) alignée par rapport à la fente (16f) ménagée dans la tige ;
le bras de pédale comprend une partie d'extrémité supérieure (28b) s'étendant vers le haut dans la fente (30a) de la structure de moyeu dans la fente (16f) de la tige, et dans le creux de la structure de moyeu ; et l'écrou (32) est positionné sur l'extrémité supérieure de la partie d'extrémité supérieure (28b) du bras de pédale.

8. Dispositif à pédale réglage selon la revendication 1, selon lequel le dispositif comprend en outre :
un manchon (34) positionné entre la structure de guidage (29) et la tige (16) et comprenant une ouverture ; et
un ressort (38) monté sur la périphérie intérieure de la structure de guidage (29) et passant dans l'ouverture du manchon (34) pour agir contre la tige (16) au niveau de l'interface entre la tige et le manchon.
